# EUROPÄISCHE PATENTSCHRIFT

(11) **EP 0 989 913 B1**
(45) Veröffentlichungstag und Bekanntmachung des Hinweises auf die Patenterteilung: **21.08.2002**
(21) Anmeldenummer: 98936160.5
(22) Anmeldetag: 15.06.1998
(51) Int. Cl.: B03B 9/06, H01J 9/00

(54) **ANLAGE ZUR WIEDERGEWINNUNG DER BESTANDTEILE DEFEKTER BZW. VERBRAUCHTER LEUCHTSTOFFRÖHREN**
FACILITY FOR RECYCLING THE COMPONENTS OF DEFECTIVE OR USED FLUORESCENT TUBES
INSTALLATION POUR LA RECUPERATION DES PARTIES CONSTITUTIVES DE TUBES FLUORESCENTS DEFECTUEUX OU USAGES

(30) Priorität: 19.06.1997 DE 29710775 U
(43) Veröffentlichungstag der Anmeldung: 05.04.2000
(73) Patentinhaber: LVG GmbH, 45329 Essen (DE); Polman, Eckhard, 46562 Voerde (DE)
(72) Erfinder: POLMAN, Eckhard, D-46562 Voerde (DE); BONMANN, Christian, D-45133 Essen (DE)
(74) Vertreter: Kluin, Jörg-E., Dr.
(86) Internationale Anmeldenummer: DE9801613
(87) Internationale Veröffentlichungsnummer: WO98058742

(56) Entgegenhaltungen:
- EP-A- 0 157 249
- EP-A- 0 638 373
- DE-A- 4 401 351
- DE-C- 19 533 143

## Beschreibung

Die Erfindung bezieht sich auf eine Anlage der dem Oberbegriff des Anspruchs 1 zugrundeliegenden Art.

Zu Beleuchtungszwecken in Büros, in öffentlichen Bereichen, Werkhallen usw. werden heute zu einem großen Teil Leuchtstofflampen verwendet, die aus einem geraden Glasrohr bestehen, dessen Innenumfang mit einem feinpulvrigen Leuchtstoff belegt ist und dessen Inneres mit einem Gas erniedrigten Drucks gefüllt ist. Diese Art von rohrförmigen Leuchtstofflampen sei als Leuchtstoffröhre bezeichnet. Die Enden der Glasröhre sind verschlossen und mit Anschlußsockeln aus Metall versehen, die Kontaktstifte tragen. Diese allgemein bekannten Leuchtstoffröhren haben nur eine begrenzte Lebensdauer und fallen daher in defektem bzw. verbrauchten Zustand in großer Zahl an. Ihre Bestandteile, nämlich das Glasrohr, die Anschlußsockel und die Inhaltsstoffe, nämlich Leuchtstoffe und Quecksilber, sind weitgehend wiedergewinnbar. Aus diesem Grunde werden die Leuchtstoffröhren zur Wiederverwertung der Bestandteile auf Paletten mit geeigneten Aufbauten gesammelt, wo sie in geordneten Lagen abgelegt werden.

Für die Wiedergewinnung der Bestandteile dieser Leuchtröhren ist eine Anlage bekannt, die eine erhöhte längliche Bühne umfaßt, auf deren einem Ende die Paletten mit den Leuchtröhren absetzbar sind. An den Palettenbereich schließt sich in Längsrichtung der Bühne ein im wesentlichen geschlossenes Gehäuse an, in welchem ein Hubbalkenförderer angeordnet ist, der die Leuchtröhren schrittweise voran- und an mehreren in dem Gehäuse angeordneten Behandlungsstationen vorbeifördert.

Die Leuchtröhren werden in der Aufgabestation von Hand einem kurzen Kettenförderer aufgegeben, der die Leuchtröhren an seinem Ende auf den Hubbalkenförderer übergibt.

Die Behandlungsstationen in dem Gehäuse umfassen zunächst eine Lochstation, in welcher feststehende Knallgasbrenner eine sehr konzentrierte dünne Flamme auf das Glasrohr in der Nähe der jeweiligen Kappe richten und in das Glasrohr ein kleines Loch brennen, durch welches Luft in die Leuchtröhre einströmen kann, um einen Druckausgleich herzustellen.

Die Leuchtröhren werden sodann an einer Abtrennstation vorbeigefördert, in der die Leuchtröhren gedreht und das Glasrohr nahe der jeweiligen Kappe und mittels eines weiteren Brenners abgetrennt, d.h. abgesprengt wird.

Es schließt sich eine Ausblasstation an, in der von einer Seite her ein kräftiger Luftstoß durch das von den Kappen befreite Glasrohr geschickt wird, der den überwiegenden Teil des am Innenumfang des Glasrohrs anhaftenden feinpulvrigen Leuchtstoffs zum anderen Ende des Glasrohrs hinausbläst.

Schließlich wird das gesäuberte Glasrohr in der Brechstation in kleine schüttfähige Scherben oder Splitter zerkleinert.

Die Kappen, das Glas und gegebenenfalls die Inhaltsstoffe werden aufgefangen und der Wiederverwertung zugeführt. Wenn die Wiederverwertung der Inhaltsstoffe wirtschaftlich nicht vertretbar ist, kommt auch eine Doponierung z.B. in einer Untertagedeponie in Betracht.

Die bekannte Anlage arbeitet seit Jahren zufriedenstellend, ist jedoch in ihrer Leistungsfähigkeit begrenzt. In der Lochstation und in der Abtrennstation muß nämlich die einzelne Leuchtstoffröhre so lange verharren, bis der Brenner das Loch geschaffen hat. Die intermittierende Arbeitsweise ist zeitraubend.

Der Erfindung liegt die Aufgabe zugrunde, eine gattungsgemäße Anlage leistungsfähiger zu gestalten.

Diese Aufgabe wird durch die in Anspruch 1 wiedergegebene Erfindung gelöst.

Die im Gegensatz zum Hubbalkenförderer kontinuierliche Arbeitsweise der Fördereinrichtung im Verein mit den sich über eine gewisse Länge in Förderrichtung erstreckenden Brennerleisten anstelle der feststehenden punktuellen Flamme in der Lochstation und der Abtrennstation erlauben eine Steigerung der Arbeitsleistung der Anlage auf das Mehrfache. Bei Versuchen wurden in einer einzigen Anlage schon elftausend Leuchtröhren pro Stunde verarbeitet.

Bei der bevorzugten Ausführungsform der Erfindung umfaßt die Fördereinrichtung gemäß Anspruch 2 zwei nebeneinander endlos in einem der Länge der marktüblichen Leuchtstoffröhren entsprechenden Querabstand in vertikalen Ebenen umlaufende Kettenförderer, deren obere Trume die Leuchtstoffröhren tragen.

Um die Arbeit in den Behandlungsstationen von der Aufgabe der Leuchtstoffröhren zu entkoppeln, empfiehlt es sich, daß der Fördereinrichtung gemäß Anspruch 3 eine Übergabe-Fördereinrichtung vorgeschaltet ist, auf die die Leuchtstoffröhren geordnet aufgebbar und mittels der die Leuchtstoffröhren vereinzelt auf die Fördereinrichtung übergebbar sind.

Die Übergabeeinrichtung kann gemäß Anspruch 4 einen Förderer umfassen, dem eine Vereinzelungseinrichtung nachgeschaltet ist.

Um von der Aufgabe der Leuchtröhren in der Aufgabestation per Hand und der damit einhergehenden Gefährdung der dies ausführenden Person bei einem Bruch der Leuchtstoffröhren freizukommen, kann gemäß Anspruch 5 die Aufgabestation eine Erfassungseinrichtung umfassen, mittels derer jeweils mindestens ein Teil einer Lage von Leuchtstoffröhren gleichzeitig erfaßbar und auf die Übergabefördereinrichtung auflegbar ist.

Die Erfassungseinrichtung kann gemäß Anspruch 6 eine Saugvorrichtung umfassen, die die relativ leichten Leuchtröhren durch Saugwirkung aus der Lage hochhebt und über der Übergabefördereinrichtung wieder freigibt.

Die Saugvorrichtung kann insbesondere einen dem Grundriß der Lage oder des Teils der Lage der Leuchtstoffröhren angepaßten Saugrahmen umfassen (Anspruch 7), der an einer mit einem auf- und niederschwenkbaren und um eine vertikale Achse drehbaren Ausleger versehenen Hubeinrichtung aufgehängt sein kann (Anspruch 8).

Die Abtrennstation weist zweckmäßig die in den Ansprüchen 9 bis 12 wiedergegebenen Merkmale auf.

Die Brennerleiste, die sowohl in der Lochstation als auch in der Abtrennstation zum Einsatz kommt, kann eine wirksame Länge zwischen 100 und 300 mm (Anspruch 13) und ein längliches Gehäuse mit an einer im Betrieb den Leuchtstoffröhren zugewandten Seitenfläche vorgesehenen dreißig bis achtzig Düsenöffnungen von 0,2 bis 0,4 mm Durchmesser aufweisen (Anspruch 14).

Ein geringer Anteil der anfallenden Leuchtstoffröhren ist für den Einsatz in explosionsgefährdeten Umgebungen vorgesehen und trägt zur Vermeidung von Funken auf der Außenseite des Glasrohrs einen achsparallel über dessen Länge durchgehenden Metallstreifen, normalerweise Kupferstreifen. Das Kupfer darf nicht in das wiedergewonnene zerkleinerte Glas gelangen, weil dadurch Verfärbungen des Glases beim Wiedereinschmelzen auftreten würden. Aus diesem Grund müssen solche besonderen Leuchtröhren aus der Weiterverarbeitung ausgeschlossen werden.

Dies geschieht mit Hilfe der Detektoreinrichtung nach Anspruch 15, die mit einer geeigneten Separiereinrichtung zusammenwirkt, mittels derer die mit Kupferstreifen versehenen Leuchtröhren aus der Weiterverarbeitung ausgeschlossen werden können, so daß das Kupfer nicht in das wiedergewonnene Glas gelangen kann. Die Detektoreinrichtung kann beispielsweise auf optischem Wege arbeiten, indem sie die Reflexionsunterschiede beim Vorbeikommen des Kupferstreifens auf der sich drehenden Leuchtröhre erkennt.

Wichtige Ausgestaltungen der Erfindung sind Gegenstand der Ansprüche 16 bis 18. Diese Merkmale erlauben die Erkennung der mit unterschiedlichen Leuchtstoffen gefüllten Leuchtstoffröhren und eine sortenweise Sortierung der ausgeblasenen Leuchtstoffe. Eine Einrichtung zur Erkennung unterschiedlicher Leuchtröhren an ihren unterschiedlich inmineszierenden Leuchtpulvern ist z.B. aus der WO 98/04904 bekannt.

In der Zeichnung ist ein Ausführungsbeispiel der Erfindung schematisch wiedergegeben.

Fig. 1 zeigt das abgeschnittene rechte Ende einer Leuchtröhre;

Fig. 2 zeigt eine Seitenansicht der erfindungsgemäßen Anlage;

Fig. 3 zeigt eine Ansicht der Anlage gemäß Fig. 2 von links;

Fig. 4 zeigt eine perspektivische Ansicht einer Brennerleiste;

Fig. 5 zeigt eine Ansicht des Saugrahmens;

Fig. 6 zeigt eine Ansicht gemäß Fig. 5 von links;

Fig. 7 zeigt eine Ansicht gemäß Fig. 6 von oben.

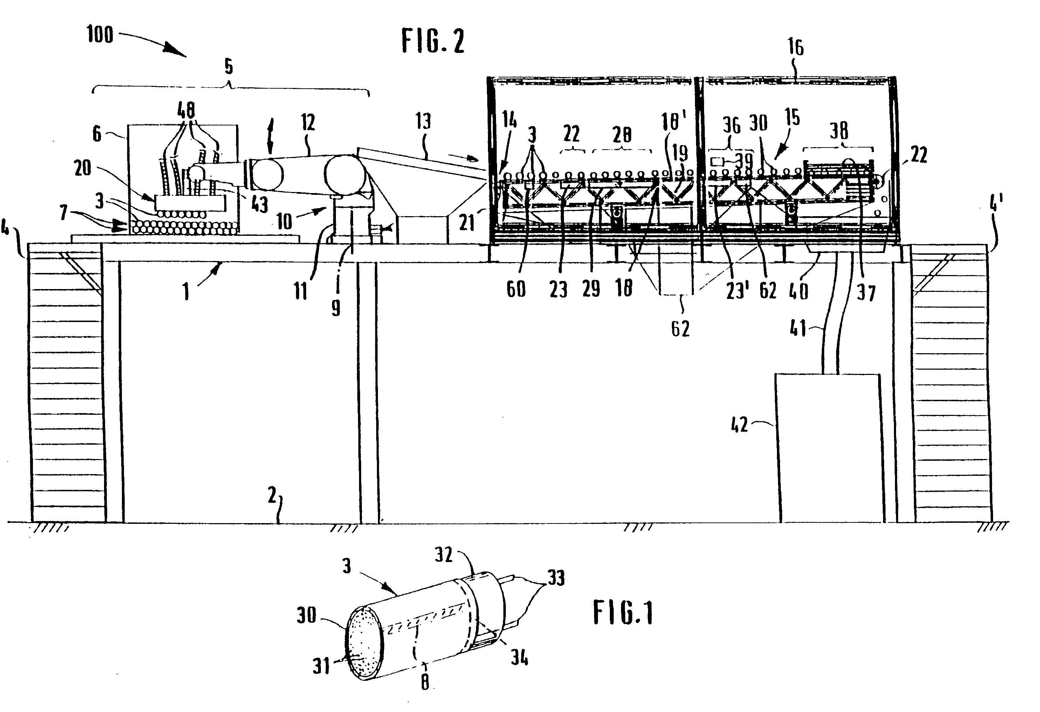

In Fig. 1 ist das abgeschnittene rechte Ende einer Leuchtröhre 3 dargestellt. Die Leuchtröhre 3 umfaßt ein Glasrohr 30 von 50 bis 180 cm Länge und einem Durchmesser von 2 bis 4 cm, welches innen mit einer feinpulvrigen, lose an der Innenwand des Glasrohrs 30 haftenden, in Fig. 1 durch die Punkte 31 dargestellte Beschichtung aus einem Leuchtstoff versehen ist. An beiden Enden ist die Leuchtstoffröhre durch einen angeschmolzenen Lampenfuß aus Bleiglas verschlossen, der die Stromzuführungen und die Wendel trägt. Außen ist an beiden Enden der Leuchtstoffröhre ein Anschlußsockel 32 aus Metall angekittet, der die Kontaktstifte 33 für den elektrischen Anschluß aufweist. Das Glasrohr 30 wird evakuiert, wodurch beim Anlegen einer Spannung an den Kontaktstiften 33 eine Gasentladung zustande kommt, die den quecksilberhaltigen Leuchtstoff 31 zum Leuchten bringt. 34 bezeichnet eine Trennstelle, an der das Ende der Leuchtstoffröhre mit dem Anschlußsockel 32 in der noch zu beschreibenden Wiedergewinnungsanlage abgetrennt wird. Auf dem Außenumfang von expiosionsgeschützten Leuchtröhren 3 ist ein Kupferstreifen 8 angebracht, der durch eine noch zu beschreibende Einrichtung zwecks Aussonderung derartiger Leuchtröhren 3 detektierbar ist.

Die in Fig. 2 als Ganzes mit 100 bezeichnete Wiedergewinnungsanlage ist auf einer Bühne 1 angeordnet, die in einer Höhe von etwa 2 bis 3 m über dem Boden 2 vorgesehen ist und den Zweck hat, unter der eigentlichen Anlage 100 Platz zum Rangieren und zum Aufstellen der Behälter für die gewonnenen Bestandteile der Leuchtröhren 3 zu schaffen. Die Bühne 1 ist über Leitern 4,4' zu ersteigen.

Auf dem in Fig. 2 linken Teil der Bühne 1 ist eine als Ganzes mit 5 bezeichnete Aufgabestation vorgesehen. Die defekten bzw. verbrauchten Leuchtröhren 3 werden auf Paletten mit einem geeigneten Aufbau angeliefert, die in Fig. 2 durch das Rechteck 6 angedeutet sein sollen und von einem Hublader auf der Bühne 1 abgesetzt werden. Die Leuchtröhren 3 sind auf den Paletten 6 in geordneten horizontalen Lagen 7 neben- und aufeinander in dichter Packung untergebracht. Neben dem Bereich, auf welchem die Paletten 6 abgesetzt werden, ist eine Hubvorrichtung 10 vorgesehen, die eine Säule 11 umfaßt, an der ein Ausleger 12 um eine vertikale Achse 9 drehbar ist. Außerdem ist der Ausleger 12 im Pfeilsinne auf- und niederschwenkbar. Am freien Ende des Auslegers 12 ist ein als Ganzes mit 20 bezeichneter Saugrahmen angehängt, der über Vakuumleitungen 48 mit einer Vakuumpumpe oder sonstigen Einrichtung zur Erzeugung eines Unterdrucks in Verbindung steht.

Der Saugrahmen 20 wird von oben auf eine Lage 7 der Leuchtröhren 3 abgesenkt und erfaßt diese beim Einschalten des Vakuums. In dem in Fig. 1 gezeigten Ausführungsbeispiel erfaßt der Saugrahmen 20 nur einen Teil einer Lage 7, nämlich sieben Leuchtröhren, die auch nicht die ganze Erstreckung des Saugrahmens 20 einzunehmen brauchen. Der Saugrahmen 20 kann also auch wenige nebeneinanderliegende Leuchtröhren anheben.

Aus der in Fig. 2 dargestellten Lage wird der Saugrahmen 20 über eine Übergabefördereinrichtung 13 gebracht, auf der die Leuchtröhren 3 abgelegt und mittels eines geeigneten Förderers, z.B. mittels eines Kettenförderers, in Pfeilrichtung gefördert werden. Am Ende der Förderstrecke des Förderers ist bei 14 eine Vereinzelungseinrichtung vorgesehen, mittels derer die Leuchtröhren 3 in vorbestimmten Abständen auf eine Fördereinrichtung 15 abgelegt werden, die noch im einzelnen beschrieben wird. Die Fördereinrichtung 15 ist von einem Gehäuse 16 umgeben, welches wegen der Gefahr der Splitterbildung bei einem eventuellen Brechen von Leuchtröhren 3 mit geschlossenen Wänden versehen ist, in denen Fenster angeordnet sind, die eine Beobachtung des Arbeitsablaufs in dem Gehäuse 16 gestatten. Das Gehäuse 16 steht unter leichtem Unterdruck, damit kein Quecksilberdampf in die Umgebung austreten kann.

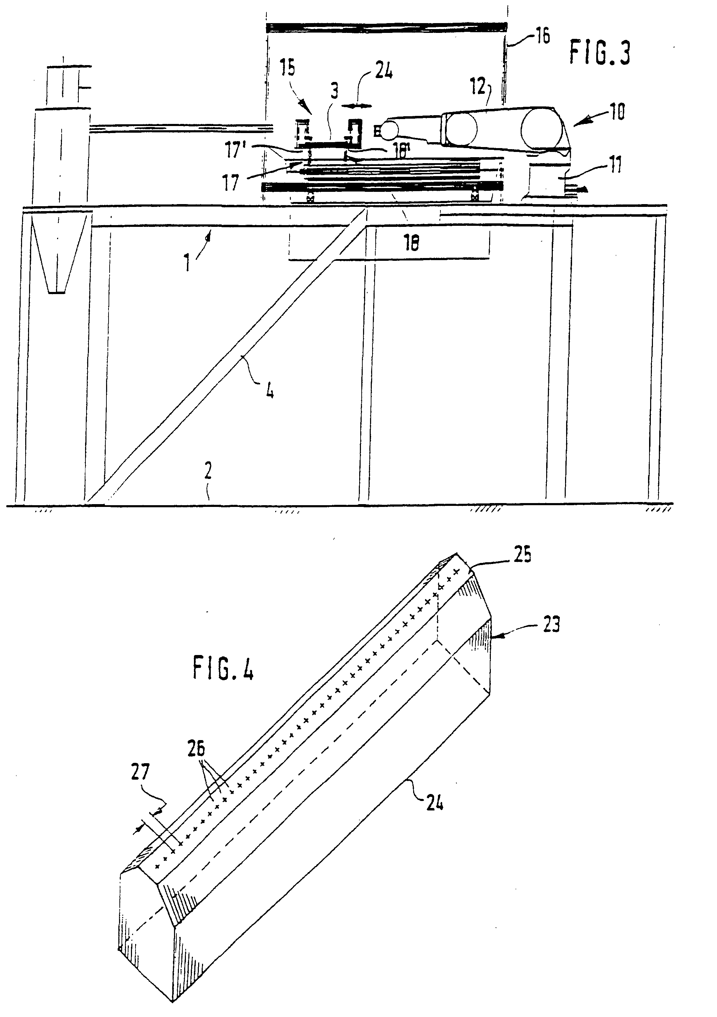

In dem Gehäuse 16 sind zwei Querabstand voneinander aufweisende Kettenförderer 17,18 angeordnet, deren Ketten über am Anfang und am Ende jeweils eines Traggerüstes 19 angeordnete Umlenkrollen 21 bzw. 22 umlaufen. Die oberen Trume 17',18' der Kettenförderer 17,18 tragen die quer zu deren Förderrichtung ausgerichteten, in Förderrichtung einen vorbestimmten Abstand voneinander einhaltenden Leuchtstoffröhren 3, wie es aus Fig. 3 ersichtlich ist. In Fig. 3 ist aus Gründen der Übersichtlichkeit der Saugrahmen 20 an dem Ausleger 12 weggelassen. Die Förderrichtung verläuft senkrecht zur Zeichenebene der Fig. 3.

Aus dem Ausführungsbeispiel der Fig. 3 geht eine Einstellung der Fördereinrichtung 15 für relativ kurze Leuchtröhren 3 hervor. Die Kettenförderer 17,18 sind also quer zur Förderrichtung ziemlich nahe beieinander angeordnet. Der Kettenförderer 18 ist jedoch quer zur Förderrichtung im Sinne des Pfeiles 24 verstellbar, um die Wiedergewinnungsanlage 100 an verschieden lange Leuchtröhren 3 anpassen zu können.

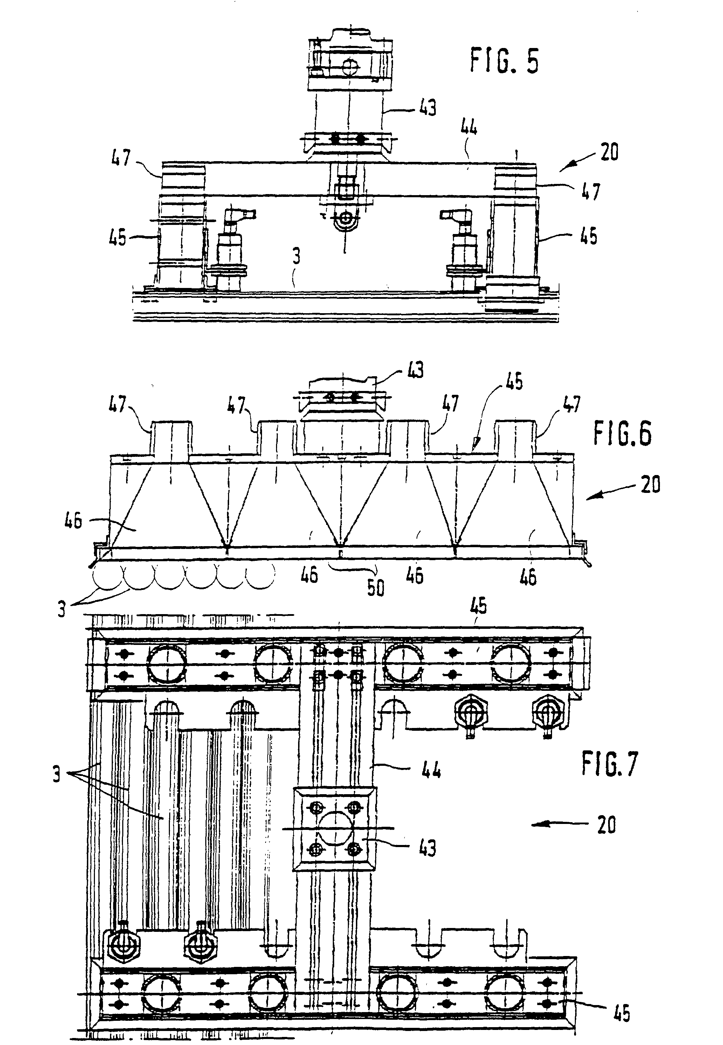

Die Leuchtröhren 3 werden von der Fördereinrichtung 15 an mehreren Behandlungsstationen entlanggeführt, wie aus Fig. 2 erkennbar ist. Die erste Behandlungsstation ist eine an einem Ende der Leuchtröhren 3 wirkende Auswahleinheit 60, die eine Anregungsquelle zum Anregen der Leuchtstoffschicht 31 der Leuchtstoffröhren 3 und ein spektroskopisches Detektionsmittel zum Detektieren des von der Leuchtstoffschicht 31 ausgestrahlten Lichts umfaßt. Anhand des Emissionsspektrums werden die Leuchtstoffröhren 3 je nach den Leuchtstoffen in mehrere z.B. drei Gruppen unterteilt, deren Inhaltsstoffe, insbesondere Leuchtstoffe separat aufgefangen werden. Die nächste Station ist eine Lochstation 22, die an einem Ende ca. 200 mm vom Anschlußsockel 32 der Leuchtröhren 3 eine sich parallel zur Förderrichtung der Fördereinrichtung 15 erstreckende Brennerleiste 23 umfaßt, von der ein Ausführungsbeispiel schematisch in Fig. 4 dargestellt ist. Die Brennerleiste 23 umfaßt ein längliches Gehäuse 24 mit einer schmalen dachförmig verjüngten Seitenfläche 25, in der eine Vielzahl, in dem Ausführungsbeispiel einundvierzig Düsenöffnungen 26 in Gestalt feiner Bohrungen von 0,3 mm Durchmesser in einer geraden Reihe mit geringem Abstand 27 aufeinanderfolgen. Die Brennerleiste 23 wird mit Knallgas beschickt und erzeugt eine im Ganzen messerartige Flamme sehr hoher Temperatur, die das Glas an den Enden des Glasrohrs, welches sich beim Passieren der Brennerleiste 23 nicht dreht, an einer Stelle durchschmilzt. Durch die Ausdehnung der Brennerleiste 23 in Förderrichtung ergibt sich bei der kontinuierlichen Vorwärtsbewegung der Leuchtröhren 3 eine ausreichende Einwirkzeit, um das Glas an einer Stelle durchgreifend zum Schmelzen und das Einströmen von Luft in das evakuierte Innere der Leuchtröhren und damit den Druckausgleich zustande zu bringen.

An die Lochstation 22 schließt sich eine Entspannungsstation 28 an, in der ein in Förderrichtung an einem Ende der Leuchtröhren 3 im Bereich der Einwirkung der Brennerleiste 23 der Lochstation 22, d.h. etwa 200 mm von einem Ende der jeweiligen Leuchtröhre 3, angeordneter länglicher Brenner 29, der mit Erdgas und Druckluft betrieben sein kann, die Glasrohre 30 an ihren Enden auf Temperatur hält, um Spannungsbrüche zu vermeiden.

In der Abtrennstation 36 sind an beiden Enden der Leuchtröhren 3 weitere Brennerleisten 23' vorgesehen. In dieser Station werden die Leuchtröhren 3 durch eine nicht dargestellte, ein am Umfang der Leuchtröhren 3 zum Angriff kommendes endlos umlaufendes Band umfassende Einrichtung oder unter Auflage auf einer nicht wiedergegebenen Rampe gedreht, so daß beim Passieren der Brennerleiste 23' der Abtrennstation 36 das Glasrohr 30 in unmittelbarer Nähe der Verschluß- und Anschlußkappe 32 entlang der Linie 34 (Fig. 1) rundum in einer schmalen Zone erhitzt wird. An die Brennerleiste 23' der Abtrennstation 36 schließt sich eine Kühlstrecke 62, ein sogenanntes Kaltes Messer, an, in der ein kalter messerartiger Luftstrahl auf die vorher erhitzte schmale Zone gerichtet wird, wodurch das jeweilige Glasrohr 30 entlang der Linie 34 abgesprengt wird (Fig. 1). Die abgesprengten Enden mit den Anschlußsockeln 32 werden aufgefangen und zur Wiederverwertung gesammelt.

Die oberhalb des Bereichs, der Brennerleiste 23', wo sich also die Leuchtröhre 3 dreht, vorgesehene Detektoreinrichtung 39 erkennt Leuchtröhren mit einem Kupferstreifen 8 (Fig. 1), die durch eine nicht dargestellte Separiereinrichtung aus dem Ablauf entfernt, z.B. gebrochen und in den Trichter 62 überführt werden.

Die nunmehr von den Verschluß- und Anschiußkappen 32 befreiten Glasrohre 30 gelangen dann in die Ausblasstation 38, in der sie von einem Niederhalter 37 auf den Kettenförderern 17,18 festgehalten werden. Dies ist notwendig, weil in der Ausblasstation 38 durch jedes Glasrohr 30 von einem Ende her durch eine Blasdüse ein starker Luftstoß gerichtet wird, der den Leuchtstoff 31 (Fig. 1) zum anderen Ende des Glasrohrs 30 hinausbläst. Der Leuchtstoff wird in einem nicht dargestellten Zyklon von dem Luftstrom getrennt und einem Auffangbehälter zugeführt.

Es sind so viele Paare von Blasdüsen und Zyklonen vorhanden, wie die Auswahleinheit 60 Sorten unterscheiden kann. Jeder Sorte sind eine Blasdüse und ein Zyklon zugeordnet. Die Auswahleinheit hat zuvor erkannt, welche Sorte von Inhaltsstoffen eine bestimmte Leuchtröhre 3 enthält. Für diese bestimmte Leuchtröhre 3 wird nur die Blasdüse in Tätigkeit gesetzt, die für die betreffende Sorte vorgesehen ist. Auf diese Weise erfolgt eine Sortierung der Inhaltsstoffe der verschiedenen Leuchtröhren.

Die ausgeblasenen Glasrohre 30 fallen in einen nur schematisch angedeuteten Brecher 40, in welchem sie in schüttfähige kleine Stücke zerkleinert werden, die über einen Kanal 41 in einen Transportbehälter 42 fallen, der zum erneuten Aufschmelzen des Glasmaterials zum Lampenhersteller transportiert wird.

In den Fig. 5 bis 7 ist der Saugrahmen 20 im einzelnen dargestellt. Er ist über ein Verbindungsstück 43 an den Ausleger 12 angehängt, das mit seinem unteren Ende in der Mitte eines Querträgers 44 befestigt ist, der an seinen beiden Enden einander parallele, sich quer zu dem Querträger 44 erstreckende Saugbalken 45 trägt. Die Saugbalken 45 umfassen in dem Ausführungsbeispiel jeweils vier voneinander getrennte Saugkammern 46, die trichterförmig ausgebildet sind und an ihren oberen Enden Anschlußstutzen 47 für den Anschluß der Vakuumleitungen 48 (Fig. 2) aufweisen.

Die Saugkammern 46 setzen sich mit ihren nachgiebigen unteren Rändern 50 in der aus den Figuren ersichtlichen Weise auf die Lage 7 der Leuchtröhren und saugen diese an. Die Leuchtröhren 3 sind so leicht, daß sie mit dieser Methode in der aus Fig. 2 ersichtlichen Weise von der Palette 6 abgehoben und auf die Übergabe-Fördereinrichtung 13 umgesetzt werden können. Zur Vermeidung von unnötigen Druckverlusten kann eine Steuerung vorgesehen sein, die bei fehlender oder ungenügender Überdeckung der Mündung einer Saugkammer 46 diese abschaltet. Aus diesem Grund haben die einzelnen Saugkammern 46 separate Vakuumleitungen 48.

## Patentansprüche

1. Anlage zur Wiedergewinnung zwecks erneuter Verwertung der Bestandteile defekter bzw. verbrauchter Leuchtstoffröhren (3), die aus einem geraden Glasrohr (30) bestehen, welches eine Gasfüllung unter erniedrigtem Druck, einen auf dem Innenumfang des Glasrohrs (30) aufgebrachten Belag aus einem feinpulvrigen Leuchtstoff (31) und an beiden Enden metallische Anschlußsockel (32) aufweist,
mit einer Fördereinrichtung (15), auf der die Leuchtstoffröhren (3) parallel zueinander, einander benachbart und quer zur Förderrichtung ausgerichtet im wesentlichen horizontal an Behandlungsstationen (22,28,36,38,40) vorbeiförderbar sind,
mit einer der Fördereinrichtung (15) vorgeschalteten Aufgabestation (5) zum Aufgeben der angelieferten Leuchtstoffröhren (3) auf die Fördereinrichtung (15),
mit einer Lochstation (22), an der an mindestens einem Ende der Leuchtstoffröhren (3) eine Lochung in dem Glasrohr (30) zwecks Entspannung des in dem Glasrohr herrschenden Unterdrucks erzeugbar ist,
mit einer Abtrennstation (36) zum Abtrennen der Verschluß- und Anschlußkappen (32) von dem Glasrohr (30) der jeweiligen Leuchtstoffröhre (3),
mit einer Ausblasstation (38), in der der Leuchtstoff (31) mittels eines Luftstoßes der Länge nach aus dem jeweiligen Glasrohr (30) ausgeblasen wird,
und mit einer Brechstation (40), in der die Glasrohre (30) in schüttfähige Bruchstücke zerkleinerbar sind,
**dadurch gekennzeichnet,**
**daß** die Fördereinrichtung (15) kontinuierlich angetrieben ist
und **daß** die Lochstation (22) an mindestens einem Ende und die Abtrennstation an beiden Enden der jeweiligen Leuchtstoffröhren (3) Brennerleisten (23) mit in einer geraden in Förderrichtung angeordneten Reihe dicht beieinander angeordneten Düsenöffnungen (26) umfaßt, die die Enden der Glasrohre (30) schlitzartig durchschmelzen.

2. Anlage nach Anspruch 1, **dadurch gekennzeichnet, daß** die Fördereinrichtung (15) zwei endlos in einem der Länge der Leuchtstoffröhren (3) entsprechenden Querabstand in vertikalen Ebenen nebeneinander umlaufende Kettenförderer (17,18) umfaßt, deren obere Trume (17',18') die Leuchtstoffröhren (3) tragen.

3. Anlage nach Anspruch 2, **dadurch gekennzeichnet, daß** der Fördereinrichtung (15) eine Übergabe-Fördereinrichtung (13) vorgeschaltet ist, auf die die Leuchtstoffröhren (3) geordnet aufgebbar und mittels der die Leuchtstoffröhren (3) vereinzelt auf die Fördereinrichtung (15) überführbar sind.

4. Anlage nach Anspruch 3, **dadurch gekennzeichnet, daß** die Übergabe-Fördereinrichtung (13) einen Förderer umfaßt, dem eine Vereinzelungseinrichtung nachgeschaltet ist.

5. Anlage nach einem der Ansprüche 1 bis 4, **dadurch gekennzeichnet, daß** die Aufgabestation (5) eine Erfassungseinrichtung umfaßt, mittels derer jeweils mindestens ein Teil einer Lage (7) von Leuchtstoffröhren (3) gleichzeitig erfaßbar und auf die Übergabe-Fördereinrichtung (13) auflegbar ist.

6. Anlage nach Anspruch 5, **dadurch gekennzeichnet, daß** die Erfassungseinrichtung eine Saugvorrichtung umfaßt.

7. Anlage nach Anspruch 6, **dadurch gekennzeichnet, daß** die Saugvorrichtung einen dem Grundriß der Lage (7) oder des Teils der Lage (7) der Leuchtstoffröhren (3) angepaßten Saugrahmen (20) umfaßt.

8. Anlage nach Anspruch 7, **dadurch gekennzeichnet, daß** der Saugrahmen (20) an einer mit einem auf- und niederschwenkbaren und um eine vertikale Achse (9) drehbaren Ausleger (12) versehenen Hubvorrichtung (10) aufgehängt ist.

9. Anlage nach einem der Ansprüche 1 bis 8, **dadurch gekennzeichnet, daß** die Abtrennstation (36) eine im Bereich beider Enden der Leuchtstoffröhre 3 in Förderrichtung sich erstreckende Brennerleiste (23') umfaßt.

10. Anlage nach Anspruch 9, **dadurch gekennzeichnet, daß** der Brennerleiste (23') eine Einrichtung zum Drehen der Leuchtröhre (3) um ihre Achse während des Passierens der Brennerleiste (23') zugeordnet ist.

11. Anlage nach Anspruch 10, **dadurch gekennzeichnet, daß** die Einrichtung innenseitig neben jeder Brennerleiste (23,23') eine Rampe umfaßt, auf der die von der Fördereinrichtung (15) horizontal geförderten Leuchtstoffröhren (3) zur Auflage kommen und sich bei der Weiterförderung rollend um ihre Achse drehen.

12. Anlage nach Anspruch 10 oder 11, **dadurch gekennzeichnet, daß** den Brennerleisten (23') jeweils eine Einrichtung zur Erzeugung eines messerartigen Kühlluftstrahls zum Absprengen der Enden der Leuchtstoffröhren (3) nachgeschaltet ist.

13. Anlage nach einem der Ansprüche 1 bis 12, **dadurch gekennzeichnet, daß** die Brennerleisten (23,23') eine wirksame Länge von 100 bis 300 mm aufweisen.

14. Anlage nach Anspruch 13, **dadurch gekennzeichnet, daß** die Brennerleisten (23,23') ein längliches Gehäuse (24) mit an einer im Betrieb den Leuchtstoffröhren (3) zugewandten Seitenfläche (25) vorgesehenen dreißig bis achtzig Düsenöffnungen (26) von 0,2 bis 0,4 mm Durchmesser aufweisen.

15. Anlage nach einem der Ansprüche 1 bis 14, **dadurch gekennzeichnet, daß** im Bereich der Brennerleisten (23) eine Detektoreinrichtung vorgesehen ist, mittels derer auf dem Außenumfang mit einem achsparallelen Metallstreifen versehene Leuchtröhren erkannt und von einer mit der Detektoreinrichtung wirkungsverbundenen Separiereinrichtung aus der Weiterverarbeitung in der Anlage (100) ausschließbar sind.

16. Anlage nach einem der Ansprüche 1 bis 15, **dadurch gekennzeichnet, daß** am Anfang der Fördereinrichtung (15) eine Auswahleinheit (60) vorgesehen ist, mittels derer die Art der in einer bestimmten auf der Fördereinrichtung (15) geförderten Leuchtstoffröhre (3) vorhandenen Leuchtstoffe erkennbar ist und einer von mehreren vorbestimmten Sorten zugeordnet werden kann.

17. Anlage nach Anspruch 16, **dadurch gekennzeichnet, daß** die Ausblasstation mehrere, in Förderrichtung aufeinanderfolgende Blasdüsen umfaßt, die jeweils einer Sorte zugeordnet sind und die mit jeweils einer Auffangeinrichtung für die ausgeblasenen Inhaltsstoffe der Leuchtröhre zusammenwirken.

18. Anlage nach Anspruch 16 und 17, **dadurch gekennzeichnet, daß** eine an die Auswahleinheit (60) angeschlossene Steuereinheit vorgesehen ist, mittels derer bei der Vorbeiförderung einer bestimmten Leuchtstoffröhre (3) diejenige Blasdüse betätigbar ist, die der in der Leuchtstoffröhre (3) enthaltenen Sorte von Leuchtstoffen zugeordnet ist.

## Claims

1. Plant for recovery for the purpose of re-use of components from faulty and/or used fluorescent tubes (3), which consist of a straight glass tube (30), which provides a gas filling under reduced pressure, a coating made from a fine-powdered fluorescent substance (31) applied to the interior circumference of the glass tube and metallic connection caps (32) at both ends, with a conveyor device (15), on which the fluorescent tubes (3) can be conveyed in an essentially horizontal manner past processing stations (22, 28, 36, 38, 40) aligned parallel to one another, adjacent to one another and transversely to the direction of conveyance,
with a loading station (5) for the loading of the supplied fluorescent tubes (3) onto the conveyor device (15),
with a piercing station (22), at which a perforation can be produced in the glass tube (30) in at least one end of the fluorescent tubes (3) for the purpose of releasing the vacuum pressure predominating in the glass tube,
with a cutting station (36) for cutting the sealing and connection caps (32) from the glass tube (30) of the relevant fluorescent tube (3),
with an expulsion station (38), in which the fluorescent substance (31) is expelled longitudinally from each glass tube (30) by means of an air impulse,
and with a crushing station (40), in which the glass tubes (30) can be crushed to form pourable fragments,
**characterised in that,**
the conveyor device (15) is driven continuously and that the piercing station (22) provides at one end at least and the cutting station provides at both ends of the relevant fluorescent tubes (3) burner strips (23) with nozzle openings arranged close to one another in a straight row aligned in the direction of conveyance, which melt through the ends of the glass tubes (30) to form a slot.

2. Plant according to claim 1, **characterised in that** the conveyor device (15) comprises two chain conveyors (17, 18) rotating endlessly adjacent to one another in vertical planes at a transverse distance corresponding to the length of the fluorescent tubes (3), the upper faces (17', 18') of which carry the fluorescent tubes (3).

3. Plant according to claim 2, **characterised in that** a transfer conveyor device (13) onto which the fluorescent tubes (3) can be loaded in a ordered manner and by means of which the fluorescent tubes (3) can be transferred in an individually sorted manner to the conveyor device (15), is provided upstream of the conveyor device (15).

4. Plant according to claim 3, **characterised in that** the transfer conveyor device (13) comprises a conveyor to which a sorting device is connected downstream.

5. Plant according to any one of claims 1 to 4, **characterised in that** the loading station (5) comprises a gripping device, by means of which in each case at least one part of the stack (7) of fluorescent tubes (3) can be gripped at the same time and loaded on to the transfer conveyor device (13).

6. Plant according to claim 5, **characterised in that** the gripping device comprises a suction device.

7. Plant according to claim 6, **characterised in that** the suction device comprises a suction frame (20) adapted to the outline of the stack (7) or the part of the stack (7) of the fluorescent tubes (3).

8. Plant according to claim 7, **characterised in that** the suction frame (20) is suspended on a lifting device (10) fitted with an arm (12) which can be swivelled up and down and rotated about a vertical axis (9).

9. Plant according to any one of claims 1 to 8, **characterised in that** the cutting station (36) comprises a burner strip (23') extending in the direction of conveyance in the region of both ends of the fluorescent tubes (3).

10. Plant according to claim 9, **characterised in that** a device for rotating the fluorescent tube (3) about its axis while it passes the burner strip (23') is associated with the burner strip (23').

11. Plant according to claim 10, **characterised in that** in its interior alongside each burner strip (23, 23'), the device provides a ramp, onto which the fluorescent tubes (3), conveyed horizontally by the conveyor device (15), are loaded and rotate about their axes in a rolling manner as they are conveyed forward.

12. Plant according to claim 10 or 11, **characterised in that** a device for producing a blade-like cold-air jet is connected downstream of each of the burner strips (23') in order to snap off the ends of the fluorescent tubes (3).

13. Plant according to any one of claims 1 to 12, **characterised in that** the burner strips (23, 23') provide an effective length of 100 to 300 mm.

14. Plant according to claim 13, **characterised in that** the burner strips (23, 23') comprise a longitudinal housing (24) with a lateral surface (25), which faces the fluorescent tubes (3) during operation, provided with 30 to 80 nozzle openings (26) of 0.2 to 0.4 mm in diameter.

15. Plant according to any one of claims 1 to 14, **characterised in that** in the region of the burner strips (23), a detector device is provided, by means of which fluorescent tubes fitted with a metal strip on the outer circumference parallel to the axis are identified and can be excluded from further processing in the plant (100) by a separating device actively connected to the detector device.

16. Plant according to any one of claims 1 to 15, **characterised in that** at the start of the conveyor device (15) a selection unit (60) is provided, by means of which the type of fluorescent substances present in a given fluorescent tube (3) conveyed on the conveyor device (15) can be identified and allocated to one of several predetermined types.

17. Plant according to claim 16, **characterised in that** the expulsion station comprises several, expulsion nozzles following one another in the direction of conveyance, each of which is allocated to one type and each of which cooperates with a collection device for collecting the substances expelled from the fluorescent tubes.

18. Plant according to claims 16 and 17, **characterised in that** a control unit connected to the selection unit (60) is provided, by means of which when a given fluorescent tube (3) is conveyed past, the expulsion nozzle allocated to the relevant type of fluorescent substance contained in the fluorescent tube (3) is activated.

## Revendications

1. Installation de récupération de composants défectueux ou usagés de tubes fluorescents (3) pour le retraitement, ces tubes se composant d'un tube en verre (30), droit, contenant une charge de gaz à faible pression, d'un revêtement appliqué sur la surface intérieure du tube de verre (3) en une matière luminescente (31) sous forme de poudre fine et aux deux extrémités, d'une douille métallique de branchement (32), comprenant :
- une installation de transport (15) sur laquelle les tubes fluorescents (3) sont disposés parallèlement les uns aux autres, dans des positions voisines et de manière alignée transversalement, essentiellement pour passer en position horizontale, dans les postes de traitement (22, 28, 36, 38, 40),
- un poste d'entrée (5) en amont de l'installation de transfert (15) pour fournir à l'installation de transport (15), les tubes fluorescents (3) livrés,
- un poste de perforation (22) dans lequel on réalise, à au moins une extrémité des tubes fluorescents (3), un perçage dans le tube de verre (30) pour équilibre la dépression régnant dans le tube en verre,
- un poste de séparation (36) pour séparer les capuchons de fermeture et de raccordement (32) du tube en verre (30) de chaque tube fluorescent (3),
- un poste de soufflage (38) pour souffler la matière luminescente (31) par un choc d'air longitudinal du tube de verre (30) respectif,
- et un poste de casse (40) dans lequel les tubes en verre (30) sont brisés en morceaux susceptibles de ruisseler,
**caractérisée en ce que**
l'installation de transport (15) est entraînée en continu et
le poste de perforation (22) comporte au moins au niveau d'une extrémité des tubes fluorescents (3) et le poste de séparation, aux deux extrémités des tubes, des rampes de brûleurs (23) avec des orifices de buses (26) étroitement juxtaposés selon une rangée droite alignée sur la direction de transfert pour fondre les extrémités des tubes de verre (30) à la manière d'une fente.

2. Installation selon la revendication 1,
**caractérisée en ce que**
l'installation de transport (15) comprend deux convoyeurs à chaîne (17, 18) qui tournent sans fin dans des plans verticaux écartés transversalement de la longueur des tubes fluorescents (3), et le brin supérieur (17', 18') des convoyeurs porte les tubes fluorescents (3).

3. Installation selon la revendication 2,
**caractérisée en ce que**
l'installation de transport (15) est précédée d'une installation de transfert (13) qui reçoit les tubes fluorescents (3) et les sépare pour les faire passer dans l'installation de transport (15).

4. Installation selon la revendication 3,
**caractérisée en ce que**
l'installation de transfert (13) comprend un convoyeur suivi par une installation de séparation.

5. Installation selon l'une quelconque des revendications 1 à 4,
**caractérisée en ce que**
le poste d'entrée (5) comprend une installation de saisie qui prend au moins une partie d'une couche (7) de tubes fluorescents (3), simultanément, et la dépose dans l'installation de transfert transport (13).

6. Installation selon la revendication 5,
**caractérisée en ce que**
l'installatio de saisie comporte un dispositif aspirant.

7. Installation selon la revendication 6,
**caractérisée en ce que**
le dispositif aspirant comprend un châssis à dépression (20) correspondant au contour de la couche (7) ou d'une partie de la couche (7) de tubes fluorescents (3).

8. Installation selon la revendication 7,
**caractérisée en ce que**
le châssis à dépression (20) est suspendu à un dispositif de levage (10) muni d'un bras (12) susceptible d'être abaissé et relevé et tournant autour d'un axe vertical (9).

9. Installation selon l'une quelconque des revendications 1 à 8,
**caractérisée en ce que**
le poste de séparation (36) comprend une rampe de brûleurs (23') s'étendant dans la direction de transfert situés au niveau des deux extrémités des tubes fluorescents (3).

10. Installation selon la revendication 9,
**caractérisée en ce que**
la rampe de brûleurs (23') comporte une installation pour faire tourner les tubes fluorescents (3) autour de leur axe pendant leur passage sur les rampes de brûleurs (23').

11. Installation selon la revendication 10,
**caractérisée en ce que**
l'installation pour faire tourner les tubes comporte, du côté intérieur, à côté de chaque rampe de brûleurs (23, 23'), une rampe sur laquelle s'appuient les tubes fluorescents (3) transportés par l'installation de transport (15), dans la direction horizontale, les tubes tournant autour de leur axe en continuant de rouler pendant leur transport.

12. Installation selon l'une quelconque des revendications 10 ou 11,
**caractérisée en ce que**
les rampes de brûleurs (23') sont suivies respectivement d'une installation créant un jet d'air de refroidissement en forme de lame pour détacher les extrémités des tubes fluorescents (3).

13. Installation selon l'une quelconque des revendications 1 à 12,
**caractérisée en ce que**
les rampes de brûleurs (23, 23') ont une longueur active comprise entre 100 et 300 mm.

14. Installation selon la revendication 13,
**caractérisée en ce que**
les rampes de brûleurs (23, 23') ont un boîtier allongé (24) ayant entre trente et quatre vingt orifices de buse (26) d'un diamètre de 0,2 à 0,4 mm dans leur surface latérale (25) tournée vers les tubes fluorescents (3), pendant le fonctionnement.

15. Installation selon l'une quelconque des revendications 1 à 14,
**caractérisée en ce qu'**
au niveau des rampes de brûleurs (23) une installation de détection est prévue pour détecter des rubans métalliques parallèles à l'axe prévu à la périphérie des tubes fluorescents, qu'une installation de séparation coopérant avec l'installation de détection, permet de séparer pour les éliminer de la suite du traitement dans l'installation (100).

16. Installation selon l'une quelconque des revendications 1 à 15,
**caractérisée en ce qu'**
au début de l'installation de transport (15), une unité de sélection (60) permet de reconnaître la nature de la matière luminescente des tubes fluorescents (3) transportés par l'installation de transport (15) et de l'associer à l'une de plusieurs sortes prédéterminées de telles matières.

17. Installation selon la revendication 16,
**caractérisée en ce que**
le poste de soufflage comporte plusieurs buses de soufflage qui se suivent dans la direction de transport et qui sont associées chaque fois à une sorte de matière, et qui coopèrent avec chaque fois une installation de réception pour recueillir les contenus des tubes fluorescents ainsi soufflés.

18. Installation selon l'une quelconque des revendications 16 et 17,
**caractérisée par**
une unité de commande reliée à l'unité de sélection (60) à l'aide de laquelle, au passage d'un certain tube fluorescent (3), la buse de soufflage correspondante est mise en oeuvre, cette buse étant associée à la sorte de matière luminescente contenue dans ce tube fluorescent (3).
